# EUROPEAN PATENT SPECIFICATION

(11) **EP 3 737 152 B1**
(45) Date of publication and mention of the grant of the patent: **12.01.2022**
(21) Application number: 20169245.6
(22) Date of filing: 14.04.2020
(51) Int. Cl.: H04W 36/00, H04W 36/36

(54) **CONDITIONAL HANDOVERS IN A WIRELESS COMMUNICATION NETWORK**
BEDINGTE HANDOVER IN EINEM DRAHTLOSKOMMUNIKATIONSNETZWERK
TRANSFERTS CONDITIONNELS DANS UN RÉSEAU DE COMMUNICATION SANS FIL

(30) Priority: 10.05.2019 IN 201941018803
(43) Date of publication of application: 11.11.2020
(73) Proprietor: Nokia Technologies Oy, 02610 Espoo (FI)
(72) Inventor: SELVAGANAPATHY, Srinivasan, 560066 Bangalore (IN); VIERING, Ingo, 81549 Munich (DE); AWADA, Ahmad, 81249 Munich (DE); STANCZAK, Jedrzej, 54107 Wroclaw (PL)
(74) Representative: Nokia EPO representatives

(56) References cited:
- WO-A1-2018/230997
- ZTE CORPORATION ET AL: "Discussion on the deconfiguration of CHO candidates", 3GPP DRAFT; R2-1907107 DISCUSSION ON THE DECONFIGURATION OF CHO CANDIDATES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Reno, USA; 20190513 - 20190517 3 May 2019 (2019-05-03), XP051711404, Retrieved from the Internet: URL:http://www.3gpp.org/ftp/tsg%5Fran/WG2% 5FRL2/TSGR2%5F106/Docs/R2%2D1907107%2Ezip [retrieved on 2019-05-03]
- INTERDIGITAL INC: "Details of Conditional Handover procedure for LTE", 3GPP DRAFT; R2-1906396 (R16 LTE MOB WI AI12331 DETAILS OF CHO IN LTE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Reno, United States; 20190513 - 20190517 3 May 2019 (2019-05-03), XP051710711, Retrieved from the Internet: URL:http://www.3gpp.org/ftp/tsg%5Fran/WG2% 5FRL2/TSGR2%5F106/Docs/R2%2D1906396%2Ezip [retrieved on 2019-05-03]

## Description

### FIELD

Various example embodiments relate in general to wireless communication networks, and conditional handovers in such networks.

### BACKGROUND

Mobility of wireless terminals needs to be enabled in various wireless communication networks and handovers may be exploited for ensuring that a wireless terminal may move without experiencing significant connectivity issues. For instance, mobility is very important for cellular networks, such as for networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. One of the topics in the 3GPP discussions is related to conditional handovers and according to the discussions there is a need to methods, apparatuses and computer programs for improving robustness and failure recovery of conditional handovers.

WO 2018/230997 A1 discloses an invention relates to a method and a device for receiving handover assistance information including a list of one or more candidate target cells. A first random access procedure to a first candidate target cell of the one or more candidate target cells and a first timer for the first candidate target cell are initiated when the first candidate target cell satisfies a handover condition. When anyone of the at least the following events occurs: (i) the first timer expires for the first candidate target cell, and (ii) a number of random access trials to the first candidate target cell reaches a maximum number; stop trying to connect the first candidate target cell.

3GPP TSG WG2 Meeting #106 (Reno, USA, 13th- 17th, May 2019, R2-1907107, "Discussion on the deconfiguration of CHO candidates") discloses discussion on an open issues regarding whether CHO (conditional handover) candidates can be released via other means.

3GPP TSG WG2 Meeting #106 (Reno, USA, 13th- 17th, May 2019, R2-1906396, "Details of Conditional Handover procedure for LTE") discloses further details of conditional handover procedure, which revises R2-1903558 with additional details on the response to conditional reconfiguration and the support for explicit deconfiguration and modification of conditional handover.

### SUMMARY

The invention is defined by the independent claims. Some embodiments of the invention are defined in the dependent claims.

According to a first aspect of the present invention, there is provided a first method for a conditional handover comprising, transmitting to a target cell, by a first user equipment, a dedicated preamble for the conditional handover, receiving from the target cell, by the first user equipment, a response to the transmitted dedicated preamble and determining, by the first user equipment, based on the response that resources allocated for the first user equipment at the target cell for the conditional handover have been deconfigured.

Non-claimed embodiments of the first aspect may comprise at least one feature from the following bulleted list or any combination of the following features:
- the dedicated preamble may be a contention free random access preamble and/or the response may be a random access response;
- the dedicated preamble may have been reassigned to a second user equipment before or at the time of the transmission of the dedicated preamble, by the first user equipment, to the target cell. Alternatively, the dedicated preamble may still assigned to the first user equipment at the time of transmission of the dedicated preamble to the target cell;
- the first method may further comprise receiving, by the first user equipment, the dedicated preamble from the target cell via a source cell;
- the response may comprise an indication indicating that the resources allocated for the first user equipment at the target cell for the conditional handover have been deconfigured;
- the first method may further comprise performing, by the first user equipment, an access procedure with the target cell or another target cell upon determining that the resources allocated for the first user equipment at the target cell have been deconfigured;
- the response may comprise an indication indicating that the resources allocated for the first user equipment have been released;
- the response may comprise an identifier of a second user equipment;
- the response may comprise an indication for redirecting the first user equipment to another target cell, and the first method may further comprise transmitting to said another target cell, by the first user equipment, a dedicated preamble associated with resources allocated for the first user equipment at said another target cell;
- the response may comprise an indication for performing a re-establishment procedure with the target cell and the first method may further comprise transmitting to the target cell, by the first user equipment, a re-establishment request;
- the first method may further comprise detecting lack of additional information in the response and responsive to detecting lack of additional information in the response, declaring a handover failure and starting a re-establishment procedure from the beginning;
- the first method may further comprise receiving from a source cell, via the target cell, an updated list of target cells in response to transmitting the dedicated preamble, wherein the updated list of target cells comprises a new target cell.

According to a second aspect of the present invention, there is provided a second method for a conditional handover comprising receiving from a first user equipment, by a target cell, a dedicated preamble assigned to the first user equipment at the target cell for the conditional handover and transmitting to the first user equipment, by the target cell, a response to the received dedicated preamble, wherein the response indicates that resources allocated for the first user equipment at the target cell for the conditional handover have been deconfigured.

Non-claimed embodiments of the second aspect may comprise at least one feature from the following bulleted list or any combination of the following features:
- the dedicated preamble may be a contention free random access preamble and/or the response may be a random access response;
- the second method may further comprise transmitting to the first user equipment, by the target cell, the dedicated preamble via a source cell;
- the response may comprise an indication indicating that the resources allocated for the first user equipment at the target cell for the conditional handover have been deconfigured;
- the response may comprise an indication indicating that the resources allocated for the first user equipment have been released;
- the response may comprise an identifier of a second user equipment;
- the response may comprise an indication for redirecting the first user equipment to another target cell;
- the response may comprise an indication for performing a re-establishment procedure with said target cell or another target cell.

According to a non-claimed third aspect of the present invention, there is provided a user equipment comprising at least one processing core, at least one memory including computer program code, the at least one memory and the computer program code being configured to, with the at least one processing core, cause the apparatus at least to perform the first method according to the first aspect of the present invention.

According to a non-claimed fourth aspect of the present invention, there is provided a target cell apparatus comprising at least one processing core, at least one memory including computer program code, the at least one memory and the computer program code being configured to, with the at least one processing core, cause the apparatus at least to perform the second method according to the second aspect of the present invention.

According to a fifth aspect of the present invention, there is provided a user equipment comprising means for performing the first method according to the first aspect of the present invention. According to a sixth aspect of the present invention, there is provided a target cell apparatus comprising means for performing the second method according to the second aspect of the present invention.

According to a non-claimed seventh aspect of the present invention, there is provided a non-transitory computer readable medium having stored thereon a set of computer readable instructions that, when executed by at least one processor, cause an apparatus to at least perform the first method according to the first aspect of the present invention.

According to an non-claimed eighth aspect of the present invention, there is provided a non-transitory computer readable medium having stored thereon a set of computer readable instructions that, when executed by at least one processor, cause an apparatus to at least perform the second method according to the second aspect of the present invention.

According to a non-claimed ninth aspect of the present invention, there is provided a computer program configured to perform the first method according to the first aspect of the present invention. According to a non-claimed tenth aspect of the present invention, there is provided a computer program configured to perform the second method according to the second aspect of the present invention.

### BRIEF DESCRIPTION OF THE DRAWINGS

FIGURE 1 illustrates an exemplary network scenario in accordance with at least some embodiments;
FIGURE 2 illustrates an example of a conditional handover in accordance with at least some embodiments;
FIGURE 3 illustrates a non-claimed apparatus;
FIGURE 4 illustrates a first exemplary signalling graph for a conditional handover in accordance with at least some embodiments;
FIGURE 5 illustrates a second exemplary signalling graph for a conditional handover in accordance with at least some embodiments;
FIGURE 6 illustrates a flow graph of a first method in accordance with at least some embodiments;
FIGURE 7 illustrates a flow graph of a second method in accordance with at least some embodiments.

### EMBODIMENTS

Robustness and failure recovery of conditional handovers may be improved by the procedures described herein. For example, if a conditional handover is cancelled but a User Equipment, UE, is not aware of the cancellation, the UE may attempt to perform a handover with a target cell even though resources allocated for the UE for the handover have been deconfigured at the target cell. In such a case, the target cell may indicate in a response to a dedicated preamble that the resources allocated for the UE for the handover have been deconfigured. In such a case, the UE may be able to detect the situation from the response and then continue by performing an access procedure, such as a connection re-establishment, with the selected target cell or another target cell. In some embodiments, the dedicated preamble may be a Contention-Free Random Access, CFRA, preamble and the response may be a random access response.

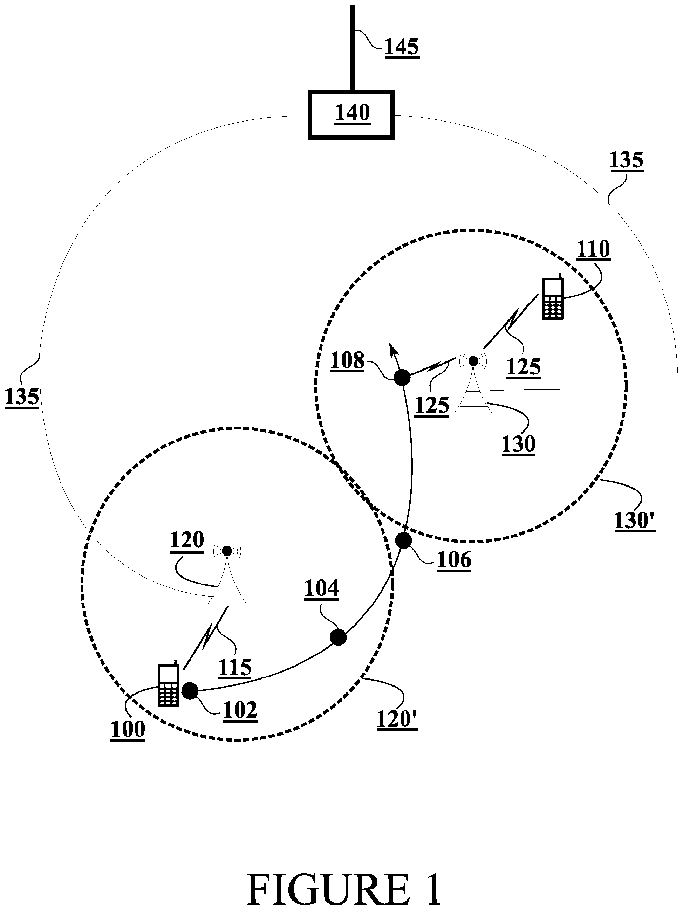

FIGURE 1 illustrates an exemplary communication network in accordance with at least some embodiments. The exemplary communication network of FIGURE 1 may comprise a wireless communication system, which may further comprise first UE 100, second UE 110, source BS 120 and target BS 130. Source BS 120 and target BS 130 may also comprise, or be associated with, at least one cell. Source BS 120 may be a source BS for a conditional handover while target BS 130 may be a target BS for the conditional handover. Thus, a cell of source BS 120 may be referred to as source cell 120' for the conditional handover while a cell of target BS 130 may be referred to as target cell 130' for the conditional handover. The communication network may also comprise core network 140.

Locations of first UE 100 at different time instants are denoted by points 102, 104, 106 and 108 in FIGURE 1. First UE 100 may be located at point 102 before a conditional handover and be connected to source BS 120 via air interface 115. Then, first UE 100 may start moving from point 102 towards target BS 130 via points 104 and 106. At point 108, first UE 100 may have performed the conditional handover. Thus, at point 108 first UE 100 may be connected to target BS via air interface 125. Second UE 110 may also be connected to target BS 130 via air interface 125.

Source BS 120 and target BS 130 may be connected, directly or via at least one intermediate node, with core network 140 via interface 135. Core network 140 may be, in turn, coupled via interface 145 with another network (not shown in FIGURE 1), via which connectivity to further networks may be obtained, for example via a worldwide interconnection network. Source BS 120 and target BS 130 may be connected with at least one other BS as well via at least one inter-BS interface (not shown in FIGURE 1), even though in some non-claimed embodiments the inter-BS interface may be absent.

First UE 100 and second UE 110 may comprise, for example, a smartphone, a cellular phone, a Machine-to-Machine, M2M, node, Machine-Type Communications node, MTC, an Internet of Things, IoT, node, a car telemetry unit, a laptop computer, a tablet computer or, indeed, any kind of suitable mobile or fixed wireless terminal or station. In some non-claimed embodiments, source BS 120 may be considered as a serving BS for first UE 100 before a conditional handover while target BS 130 may be considered as a serving BS for first UE 100 after the conditional handover.

Air interface 115 between first UE 100 and source BS 120 may be configured in accordance with a first Radio Access Technology, RAT, which first UE 100 and source BS 120 are configured to support, and first UE 100 may communicate with source BS 120 via air interface 115 using the first RAT before a conditional handover. Similarly, air interface 125 between first UE 100 and target BS 130 may be configured in accordance with a second RAT, which first UE 100 and target BS 130 are configured to support, and first UE 100 may communicate with target BS 130 via air interface 125 using the second RAT after the conditional handover.

The first RAT and the second RAT may, or may not, be the same. That is to say, the conditional handover may be an intra-RAT or inter-RAT handover. Examples of cellular RATs include Long Term Evolution, LTE, New Radio, NR, which may also be known as fifth generation, 5G, radio access technology and MulteFire. For instance, in the context of LTE, a BS may be referred to as eNB while in the context of NR, a BS may be referred to as gNB. In any case, embodiments are not restricted to any particular wireless technology. Instead, non-claimed embodiments may be exploited in any wireless communication system wherein conditional handovers are used.

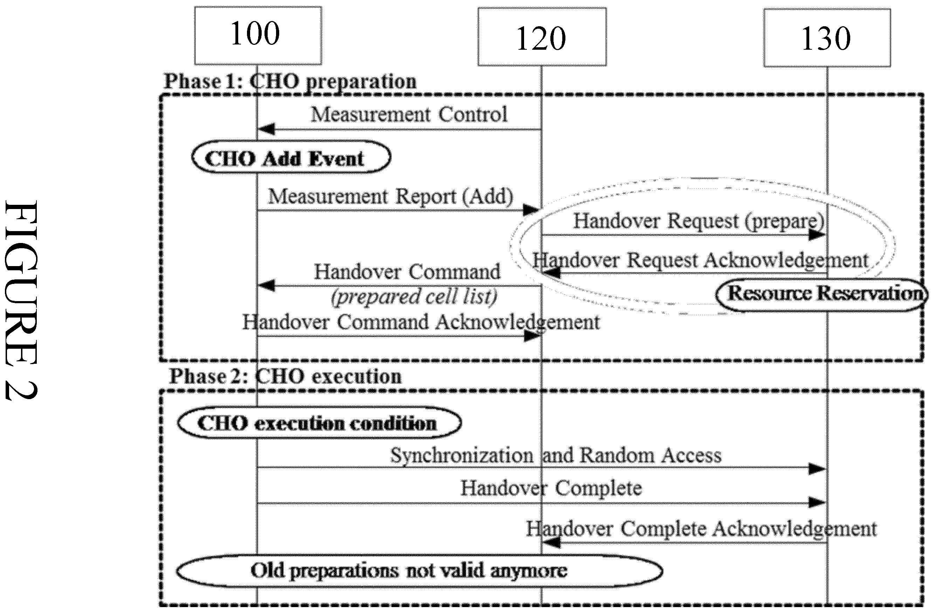

FIGURE 2 illustrates an example of a conditional handover in accordance with at least some embodiments. On the vertical axes are disposed, from the left to the right, first UE 100, source BS 120 and target BS 130 of FIGURE 1. In case of a Conditional HandOver, CHO, a handover command may be provided to first UE 100 by source BS 120 during preparation of the CHO (Phase 1), i.e., before executing the CHO (Phase 2). The handover command may be provided along with a condition for executing the CHO and the handover command may comprise a list of cells prepared for the CHO, and the list of cells prepared for the CHO may further comprise target cell 130' associated with target BS 130.

In response to receiving the handover command, first UE 100 may measure the target cell to determine, or check, whether the condition for executing the CHO is met. First UE 100 may autonomously trigger the CHO once the condition for executing the CHO is fulfilled, i.e., met. As preparation of a CHO may comprise preparation of multiple cells for the CHO, all the prepared cells may be indicated in the handover command, to enable a handover if first UE 100 moves towards any of the multiple cells that have been prepared for the CHO.

However, as preparation for a CHO may comprise early preparation of multiple target cells and transmitting the handover command to first UE 100 early, when a condition associated with a cell of source BS 120 is still sufficient, resources may be reserved at the target cells for first UE 100 for a relatively long time compared to a legacy handover. Moreover, it is possible that first UE 100 may not even meet any condition provided in the handover command for the target cells, for executing the CHO, due to a mobility pattern of first UE 100 or changes in radio conditions. Therefore, the resources reserved at the target cells for first UE 100 may need to be released at some point.

Resources may be released at the target cells using two solutions, implicit and explicit deconfiguration. Implicit deconfiguration may comprise the use of a timer. The timer may be associated with the handover command. If the condition for executing the CHO is not met while the timer is running, first UE 100 may upon expiry of the timer implicitly de-configure existing configurations and inform a network about the deconfiguration via Radio Resource Control, RRC, signaling. The network may also release the resources reserved at the target cells for the CHO upon expiry of the timer similarly.

In case of explicit deconfiguration, a network may transmit a new RRC signaling message to first UE 100 for de-configuring the resources reserved at the target cells for the CHO of first UE 100. Explicit deconfiguration may be triggered by the network based on measurements received from first UE 100. For example, source cell 120' may decide that a CHO towards target 130' cell is not required, e.g., based on a measurement report received from first UE 100. For instance, the measurement report may indicate that the serving cell has become better than a threshold. Alternatively, or in addition, explicit deconfiguration may be triggered by the network if the resources reserved at the target cells for the CHO need to be released or a timer associated with reservation of resources expires. In such a case, target cell 130' may initiate cancellation of the CHO.

If the deconfiguration is initiated by target BS 130, target BS 130 may release the resources reserved for first UE 100 for the CHO first, and then inform source BS 120 about cancellation of the CHO, i.e., release of the resources. In such a case, source BS 120 may inform first UE 100 about the deconfiguration, for example via RRC signaling. Target BS 130 may also decide to wait for a deconfiguration response from first UE 100, via source BS 120, before releasing the resources reserved for the CHO to avoid a situation, wherein first UE 100 and target BS 130 would not have common understanding about the situation of the reserved resources. Nevertheless, even in such a case there is a possibility that target BS 130 would not receive the deconfiguration response from first UE 100 within a specific time. For example, if first UE 100 has moved away from source BS 120 already, the signaling procedure, such as a RRC signaling procedure, may not succeed. Consequently, target BS 130 may not be able to inform first UE 100 about cancellation of the CHO via source BS 120.

So in case of both, implicit and explicit deconfiguration, there is a possibility that the resources reserved for the CHO of first UE 100 have been released at target cell 130' when first UE 100 tries to access target cell 130'. Hence, first UE 100 may fail in a random access procedure for the CHO. Embodiments of the present invention therefore provide improvements for conditional handovers, especially to improve failure handling for cases wherein first UE 100 tries to access target cell 130'even though resources allocated for first UE 100 have been deconfigured at target cell 130'.

In some non-claimed embodiments, target cell 130' may fail to receive a confirmation of cancellation of the CHO, i.e., the deconfiguration response, from first UE 100. So target cell 130' may release the resources reserved for the CHO of first UE 100 without releasing, or reassigning, a dedicated preamble associated with the resources reserved for first UE 100 at target cell 130'. In some embodiments, the dedicated preamble may be a CFRA preamble.

If target cell 130' receives the dedicated preamble from first UE 100 upon releasing the resources reserved for the CHO of first UE 100, target cell 130' transmits a response to UE 100, the response comprising information indicating that the resources reserved for the CHO of first UE 100 have been released. So upon receiving the response, first UE 100 determines based on the response that resources allocated for it at target cell 130' for the conditional handover have been deconfigured and may try to perform a handover with another target cell in the list of prepared cells for the CHO or try to perform a re-establishment procedure, such as connection re-establishment, with target cell 130'.

Moreover, in some non-claimed embodiments, target cell 130' may release, or reassign, a dedicated preamble associated with the resources reserved for first UE 100 at target cell 130'. The released dedicated preamble may then be reassigned to, for example, second UE 110 in FIGURE1. In such a case it may happen that if target cell 130' receives the dedicated preamble from first UE 100 upon releasing the resources reserved for the CHO of first UE 100 and reassigning the dedicated preamble, target cell 130' may transmit a response to first UE 100, the response comprising an identity of second UE 110. Upon receiving the response comprising the identity of second UE 110, first UE 100 may detect that the response was not directed to it and also determine that the resources have been deconfigured. Hence, first UE 100 may try to perform a handover to another target cell, connection re-establishment and/or declare a handover failure.

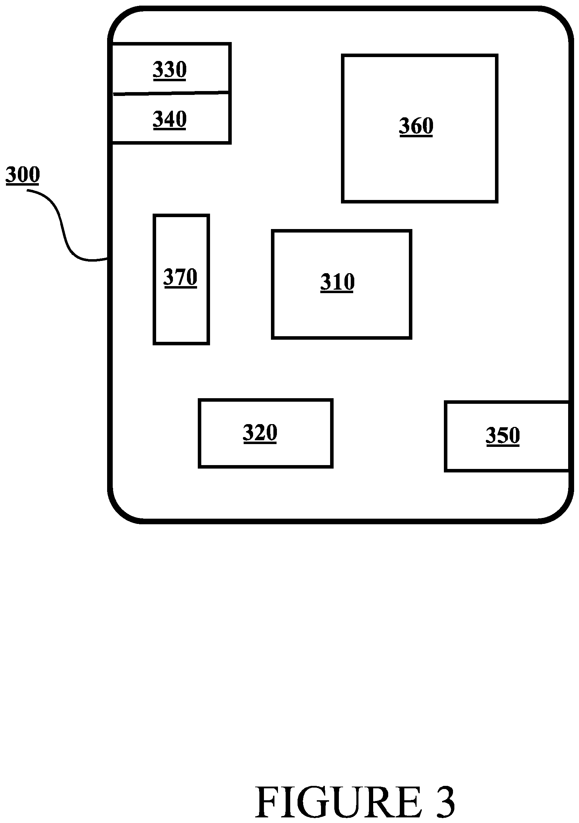

FIGURE 3 illustrates a non-claimed example apparatus capable of supporting at least some embodiments. The example apparatus may be suitable for operation in a RAN. Illustrated is device 300, which may comprise, for example, first UE 100, target BS 130, or a cell of target BS 130, or a device controlling functioning thereof. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Global System for Mobile communication, GSM, Wideband Code Division Multiple Access, WCDMA, 5G, Long Term Evolution, LTE, IS-95, Wireless Local Area Network, WLAN, Ethernet and/or Worldwide Interoperability for Microwave Access, WiMAX, standards, for example.

Device 300 may comprise a Near-Field Communication, NFC, transceiver 350. NFC transceiver 350 may support at least one NFC technology, such as Bluetooth, Wibree or similar technologies.

Device 300 may comprise User Interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a Subscriber Identity Module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the embodiments.

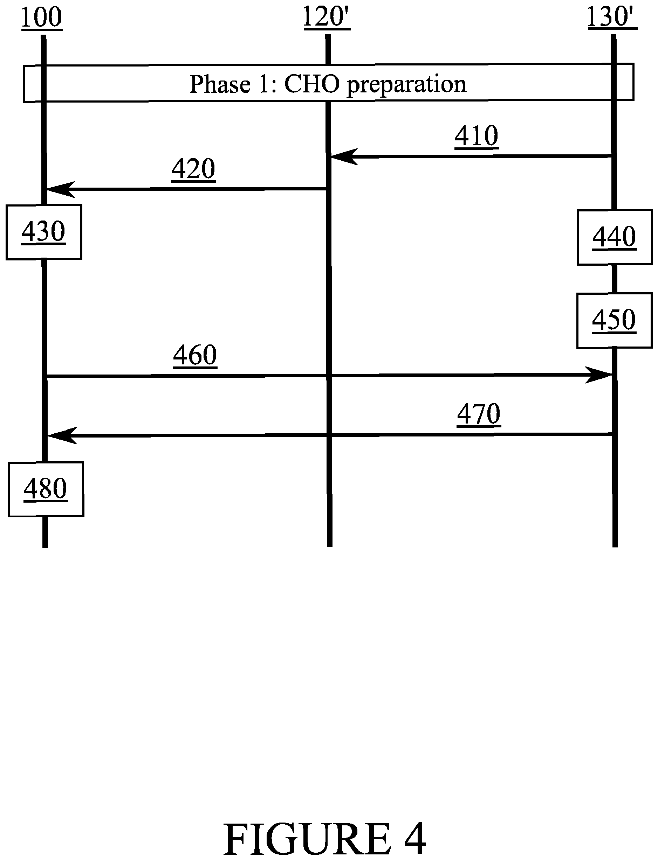

FIGURE 4 illustrates a first exemplary signalling graph for a conditional handover in accordance with at least some embodiments. On the vertical axes are disposed, from the left to the right, first UE 100, source cell 120' and target cell 130' of FIGURE 1. The first exemplary signaling graph of FIGURE 4 demonstrates a method, wherein target cell 130' may continue to detect the dedicated preamble assigned for first UE 100 after deconfiguration of a handover configuration of first UE 100, i.e., after de-configuring the resources allocated for first UE 100 for the conditional handover. Phase 1, CHO preparation, in FIGURE 4 may correspond to the CHO preparation of FIGURE 2. In some embodiments, the dedicated preamble may be a CFRA preamble.

At some point after the CHO preparation, target cell 130' may initiate cancellation of the CHO and a deconfiguration of resources allocated for first UE 100 at target cell 130' for the CHO, for example to admit a new UE or to increase resource allocation for a UE that is already connected to target cell 130' with higher priority and/or Quality of Service, QoS, requirement. Target cell 130' may thus release the resources reserved for the CHO of first UE 100, i.e., cancel the overbooking done for the CHO of first UE 100 but still continue detection of the dedicated preamble assigned for first UE 100, i.e., the deconfigured UE, for the CHO.

Target cell 130' may initiate cancellation of the CHO by transmitting, at step 410, a request for cancellation of the CHO to source cell 120'. Target cell 130' may also start a timer for a response to the request for cancellation of the CHO. Moreover, upon receiving the request for cancellation of the CHO source cell 120' may, at step 420, transmit to first UE 100 a reconfiguration message comprising an indication about cancellation of the CHO to target cell 130'. The reconfiguration message may be an RRC Reconfiguration message. However, first UE 100 may have been detached from source cell 120' already and moved towards target cell 130'. Hence, first UE 100 may not be able to receive the reconfiguration message comprising the indication about cancellation of the CHO to target cell 130'.

At step 440, the timer for a response to the request for cancellation of the CHO may expire at target cell 130'. Consequently, target cell 130' may, at step 440, release the resources reserved for first UE 100 upon expiry of the timer. At step 450, target cell 130' may decide to continue to monitor for detection of the dedicated preamble assigned to first UE 100 for the CHO, i.e., even though the resources reserved for first UE 100 may be released, the dedicated preamble may not be reassigned. The dedicated preamble may thus be still assigned to first UE 100.

At step 460, first UE 100 transmits the dedicated preamble upon detecting that the condition for executing the CHO has been met, or fulfilled. At step 460 the dedicated preamble may be transmitted towards target cell 130', even though the resources allocated for first UE 100 at target cell 130' have been deconfigured already at step 440. In some non-claimed embodiments, the dedicated preamble may be transmitted in Msg1.

At step 470, target cell 130' transmits a response to the dedicated preamble received at step 460. The response comprises an indication indicating that the resources allocated for first UE 100 have been released. For instance, the response may be a Random Access Response, RAR. The response may be referred to as a Random Access Channel, RACH, response as well, i.e., Msg2.

Target cell 130' may also include additional information to the response, such as an indication for redirecting first UE 100 to another target cell, an indication for performing a re-establishment procedure, a list of remaining target cells or an identifier of another UE, such as second UE 120.

For instance, target cell 130' may include an indication for redirecting first UE 100 to another target cell. If the response to the dedicated preamble comprises the indication for redirecting first UE 100 to another target cell, first UE 100 may stop the random access procedure with target cell 130' and try to access other suitable/prepared target cells in the list of prepared target cells for the CHO. That is to say, if the response to the dedicated preamble comprises the indication for redirecting first UE 110 to another target cell, first UE 100 may, at step 480, transmit a dedicated preamble associated with resources allocated for first UE 100 at said another target cell responsive to receiving the response to the dedicated preamble. For instance, source cell 120' may provide an update for target cell 130', which has triggered the deconfiguration, about valid target cells for the CHO. The update may be provided via inter-BS signalling. The response may then comprise information about valid, remaining target cells for the CHO, so that first UE 100 may retry the handover.

Alternatively, target cell 130' may include an indication for performing a re-establishment procedure with target cell 130' to the response. If the response to the dedicated preamble comprises the indication for performing a re-establishment procedure with target cell 130', first UE 100 may, at step 480, transmit a re-establishment request to target cell 130' responsive to receiving the response. In some non-claimed embodiments, the response to the dedicated preamble may comprise an uplink grant for the re-establishment and first UE 100 may use the uplink grant for transmitting the re-establishment request. The re-establishment request may be a RRC Connection Re-establishment Request, e.g., for re-establishing radio bearers to target cell 130'. So in general first UE 100 may determine, based on the response, that resources allocated for the first user equipment at target cell 130' for the conditional handover have been deconfigured and perform an access procedure with target cell 130' or another target cell upon determining that the resources allocated for the first user equipment at target cell 130' have been deconfigured.

In some embodiments, target cell 130' may provide no additional information in the response to the dedicated preamble. In such a case, first UE 100 may, upon detecting lack of additional information in the response, declare a handover failure and start a re-establishment procedure with any other suitable cell, i.e., from the beginning. In general, starting the re-establishment procedure from the beginning may comprise cell (re-) selection, contention based RACH access, etc.

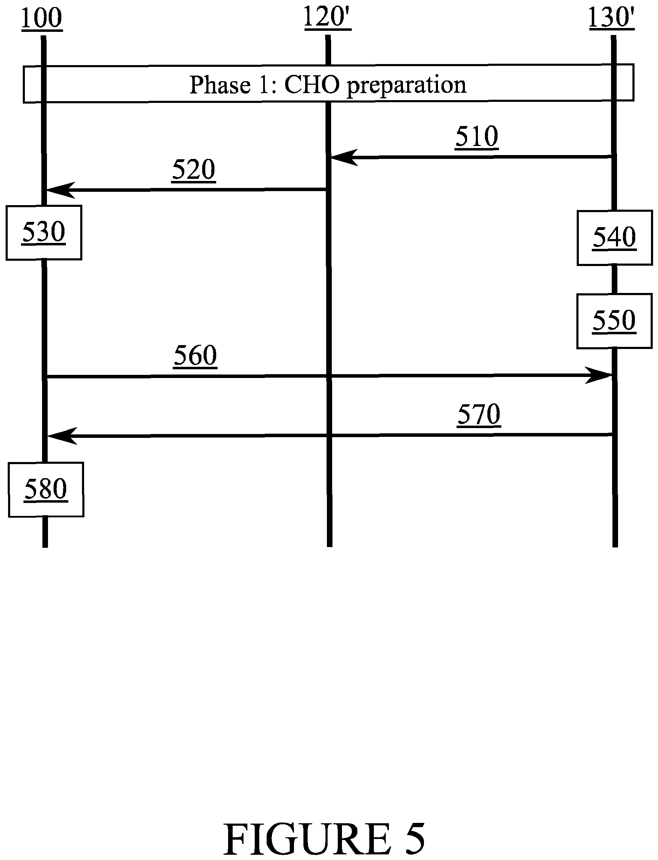

FIGURE 5 illustrates a second exemplary signalling graph for a conditional handover in accordance with at least some embodiments. On the vertical axes are disposed, from the left to the right, first UE 100, source cell 120' and target cell 130' of FIGURE 1. The second exemplary signaling graph of FIGURE 5 demonstrates a method, wherein target cell 130' may de-configure the dedicated preamble assigned for first UE 110 in addition to de-configuring the resources allocated for first UE 100 for the CHO. In FIGURE 5, Phase 1, CHO preparation, may correspond to the CHO preparation of FIGURE 2 similarly as in case of FIGURE 4. Moreover, steps 510 - 540 may correspond to steps 410 - 440 of FIGURE 4.

At some point after the CHO preparation, cancellation of the CHO and a deconfiguration of resources allocated for first UE 100 at target cell 130' for the CHO may be initiated by target cell 130' for another UE, such as second UE 110, which may also require a dedicated preamble. So at step 550, target cell 130' may thus reassign the dedicated preamble, which was originally assigned for first UE 100 for the CHO, to another UE, such as second UE 110. In such a case, a random access attempt by first UE 100 would be considered by target cell 130' as a random access attempt from said another UE, such as second UE 110. Consequently, the random access attempt would be unsuccessful because target cell 130', or a BS associated with target cell 130', would try to decode a handover complete message using security keys of said another UE, such as second UE 110.

At step 560, first UE 100 transmits the dedicated preamble upon detecting that the condition for executing the CHO has been met, or fulfilled, similarly as in step 460 of FIGURE 4. At step 570, target cell 130' transmits a response to the dedicated preamble received at step 560. In some embodiments, the response may comprise an identifier of another UE, such as second UE 110. Said identifier may be a unique identifier, such as a Cell Radio Network Temporary Identifier, C-RNTI. In some non-claimed embodiments, said identifier may be mapped to the dedicated preamble using latest UE context information. The identifier may be thus used to differentiate first UE 100 and second UE 110.

At step 580, first UE 100 may upon receiving the response detect that the identifier in the response does not match an identifier of first UE 100. For instance, a C-RNTI in the response may be different compared to a C-RNTI of first UE 100. Upon detecting that the identifier in the response does not match the identifier of first UE 100, first UE 100 may determine, based on the response, at least one further action to be performed. For example, if the response comprises a list of remaining target cells for the CHO, first UE 100 may try to perform a handover to at least one of the remaining cells in the list. On the other hand, if the response comprises an indication for performing a re-establishment procedure with the target cell, first UE 100 may transmit a re-establishment request, such as an RRC Connection Re-establishment Request, to target cell 130'. In some non-claimed embodiments, the request may be transmitted using an uplink grant provided in the response.

Alternatively, first UE 100 may stop the random access procedure with target cell 130' and after cell reselection, try to access other suitable/prepared target cells in the list of prepared target cells for the CHO. Thus, first UE 100 may, at step 580, transmit a re-establishment request to another target cell in response to receiving the response preamble and detecting that the identifier in the response does not match the identifier of first UE 100. In such a case first UE 100 may declare a handover failure as well.

In some non-claimed embodiments, the response to the dedicated preamble may comprise an uplink grant for the re-establishment and first UE 100 may use the uplink grant for transmitting the re-establishment request. The re-establishment request may be a RRC Connection Re-establishment Request, e.g., for re-establishing radio bearers to target cell 130'.

In general, the response to the dedicated preamble, transmitted from target cell 130' to first UE 100, comprises an indication indicating that the resources allocated for first UE 100 at target cell 130' for the conditional handover have been deconfigured. First UE 100, based on such indication, determines that resources allocated for first UE 100 at target cell 130' for the conditional handover have been deconfigured. Moreover, the indication indicating that the resources allocated for first UE 100 at target cell 130' for the conditional handover have been deconfigured may further comprise at least one of:
- an indication indicating that the resources allocated for the first user equipment have been released;
- an identifier of second UE 110;
- an indication for redirecting first UE 100; and
- an indication for performing a re-establishment procedure with target cell 130' or another target cell.

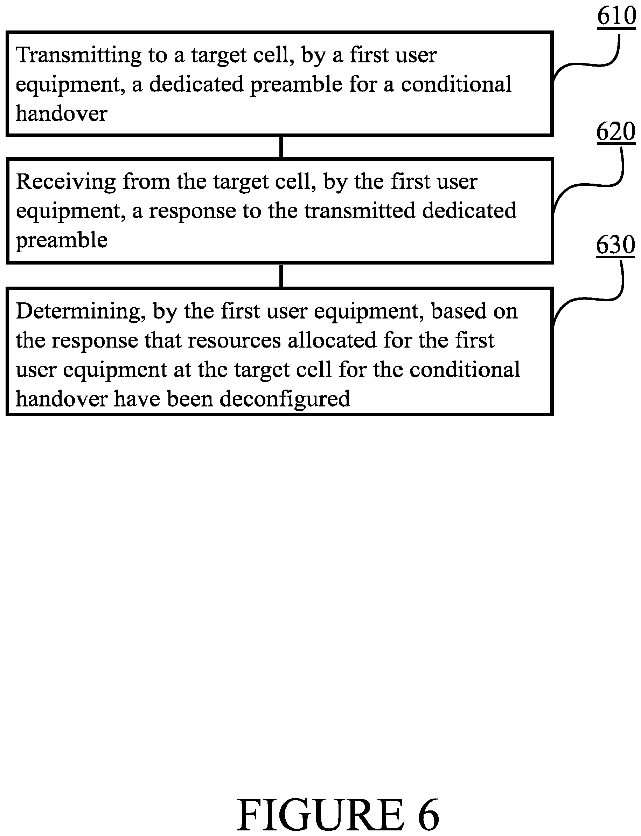

FIGURE 6 is a flow graph of a first method in accordance with at least some embodiments. The phases of the illustrated first method are performed by first UE 100. The phases of the first method may be suitable for a conditional handover.

The first method comprises, at step 610, transmitting to a target cell, by a first user equipment, a dedicated preamble for the conditional handover. The first method also comprises, at step 620, receiving from the target cell, by the first user equipment, a response to the transmitted dedicated preamble. In addition, the first method comprises, at step 630, determining, by the first user equipment, based on the response that resources allocated for the first user equipment at the target cell for the conditional handover have been deconfigured.

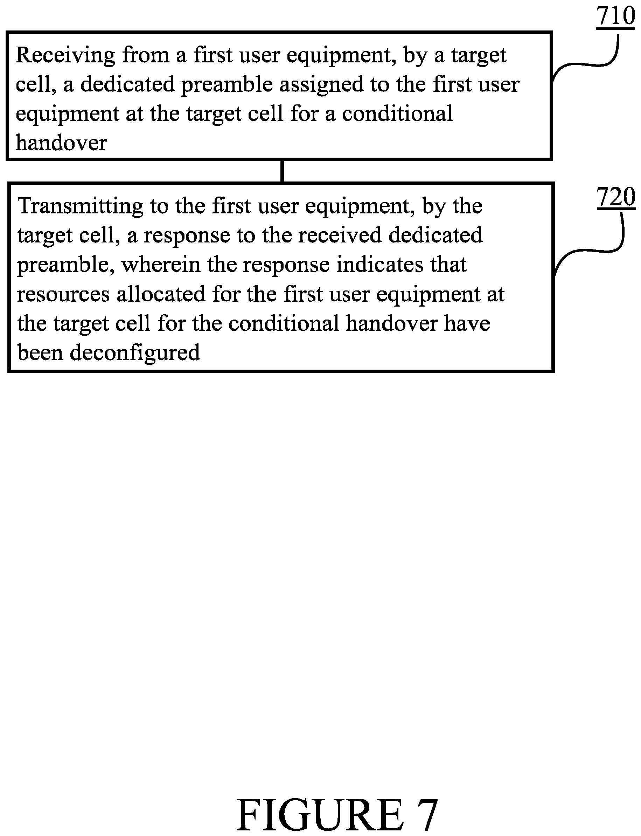

FIGURE 7 is a flow graph of a second method in accordance with at least some embodiments. The phases of the illustrated second method are performed by target BS 130. The phases of the second method may be suitable for a conditional handover.

The second method comprises, at step 710, receiving from a first user equipment, by a target cell, a dedicated preamble assigned to the first user equipment at the target cell for the conditional handover. The second method also comprises, at step 720, transmitting to the first user equipment, by the target cell, a response to the received dedicated preamble, wherein the response indicates that resources allocated for the first user equipment at the target cell for the conditional handover have been deconfigured.

It is to be understood that the embodiments disclosed are not limited to the particular structures, process steps, or materials disclosed herein. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member.

In an embodiment, an apparatus, such as, for example, first UE 100, or target BS 130 or target cell 130', comprises means for carrying out the embodiments described above and any combination thereof.

In a non-claimed embodiment, a computer program may be configured to cause a method in accordance with the embodiments described above and any combination thereof. In a non-claimed embodiment, a computer program product, embodied on a non-transitory computer readable medium, may be configured to control a processor to perform a process comprising the embodiments described above and any combination thereof.

In a non-claimed embodiment, an apparatus, such as, for example first UE 100, target BS 130 or target cell 130', or a control device configured to control the functioning thereof, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications falling within the scope of the claims can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments find industrial application in wireless communication networks, wherein it is desirable to enable robust conditional handovers. More specifically, at least some embodiments find industrial application in cellular communication networks, such as in 5G/NR networks. For instance, embodiments of the present invention may be applied for 3GPP RAN Rel-16 standardization.

### ACRONYMS LIST

- 3GPP: 3^{rd} Generation Partnership Project
- BS: Base Station
- CFRA: Contention-Free Random Access
- CHO: Conditional handover
- C-RNTI: Cell Radio Network Temporary Identifier
- GSM: Global System for Mobile communication
- IoT: Internet of Things
- LTE: Long-Term Evolution
- M2M: Machine-to-Machine
- MAC: Media Access Control
- NFC: Near-Field Communication
- NR: New Radio
- QoS: Quality of Service
- RACH: Random Access Channel
- RAN: Radio Access Network
- RAT: Radio Access Technology
- RRC: Radio Resource Control
- SIM: Subscriber Identity Module
- UE: User Equipment
- UI: User Interface
- WCDMA: Wideband Code Division Multiple Access

### REFERENCE SIGNS LIST

| | |
|---|---|
| 100 | First UE |
| 110 | Second UE |
| 115, 125 | Air interfaces |
| 120 | Source BS |
| 120' | Source cell |
| 130 | Target BS |
| 130' | Target cell |
| 135, 145 | Wired Interfaces |
| 140 | Core network |
| 300 - 370 | Structure of the apparatus of FIGURE 3 |
| 410 - 480 | Steps of the signaling graph of FIGURE 4 |
| 510 - 580 | Steps of the signaling graph of FIGURE 5 |
| 610 - 630 | Phases of the first method in FIGURE 6 |
| 710 - 720 | Phases of the second method in FIGURE 7 |

## Claims

1. A first user equipment (100) comprising:
- means for transmitting to a target cell (130'), by the first user equipment, a dedicated preamble for a conditional handover;
- means for receiving from the target cell, by the first user equipment, a response to the transmitted dedicated preamble; and
- means for determining, by the first user equipment, based on the response that resources allocated for the first user equipment at the target cell for the conditional handover have been deconfigured.

2. The first user equipment according to claim 1, wherein the dedicated preamble is a contention free random access preamble and/or the response is a random access response.

3. The first user equipment according to claim 1 or claim 2, wherein the dedicated preamble has been reassigned to a second user equipment before or at the time of the transmission of the dedicated preamble, by the first user equipment, to the target cell.

4. The first user equipment according to claim 1 or claim 2, wherein the dedicated preamble is still assigned to the first user equipment at the time of transmission of the dedicated preamble to the target cell.

5. The first user equipment according to any of the preceding claims, further comprising:
- means for receiving, by the first user equipment, the dedicated preamble from the target cell via a source cell (120').

6. The first user equipment according to any of the preceding claims, wherein the response comprises an indication indicating that the resources allocated for the first user equipment at the target cell for the conditional handover have been deconfigured.

7. The first user equipment according to any of the preceding claims, further comprising:
- means for performing, by the first user equipment, an access procedure with the target cell or another target cell upon determining that the resources allocated for the first user equipment at the target cell have been deconfigured.

8. The first user equipment according to claim 3, wherein the response comprises an identifier of a second user equipment (110).

9. The first user equipment according to any of the preceding claims further comprising:
- means for transmitting to said another target cell, by the first user equipment, a dedicated preamble associated with resources allocated for the first user equipment at said another target cell if the response comprises additional information comprising an indication for redirecting the first user equipment to another cell.

10. The first user equipment according to any of the preceding claims 1-8 further comprising:
- means for transmitting to the target cell, by the first user equipment, a re-establishment request if the response comprises additional information comprising an indication for performing a re-establishment procedure with the target cell.

11. The first user equipment according to any of the preceding claims 9-10, further comprising:
- means for detecting lack of the additional information in the response; and
- responsive to detecting lack of additional information in the response, means for declaring a handover failure and starting a re-establishment procedure from the beginning.

12. A target cell (130') apparatus comprising:
- means for receiving from a first user equipment (100), by the target cell, a dedicated preamble assigned to the first user equipment at the target cell for a conditional handover; and
- means for transmitting to the first user equipment, by the target cell, a response to the received dedicated preamble, wherein the response indicates that resources allocated for the first user equipment at the target cell for the conditional handover have been deconfigured.

13. A method for a conditional handover, comprising:
- transmitting (610) to a target cell (130'), by a first user equipment (100), a dedicated preamble for a conditional handover;
- receiving (620) from the target cell, by the first user equipment, a response to the transmitted dedicated preamble; and
- determining (630), by the first user equipment, based on the response that resources allocated for the first user equipment at the target cell for the conditional handover have been deconfigured.

14. A method for a conditional handover, comprising:
- receiving (710) from a first user equipment (100), by a target cell (130'), a dedicated preamble assigned to the first user equipment at the target cell for a conditional handover; and
- transmitting (720) to the first user equipment, by the target cell, a response to the received dedicated preamble, wherein the response indicates that resources allocated for the first user equipment at the target cell for the conditional handover have been deconfigured.

## Patentansprüche

1. Erste Teilnehmereinrichtung (100), die Folgendes umfasst:
- Mittel zum Übertragen einer dedizierten Präambel für eine bedingte Übergabe durch die erste Teilnehmereinrichtung zu einer Zielzelle (130');
- Mittel zum Empfangen einer Antwort auf die übertragene dedizierte Präambel durch die erste Teilnehmereinrichtung von der Zielzelle; und
- Mittel zum Bestimmen durch die erste Teilnehmereinrichtung auf Basis der Antwort, dass die Auslegung von Ressourcen, die für die Teilnehmereinrichtung in der Zielzelle für die bedingte Übergabe zugeteilt sind, aufgehoben wurde.

2. Erste Teilnehmereinrichtung nach Anspruch 1, wobei die dedizierte Präambel eine konfliktfreie Direktzugriffspräambel ist und/oder die Antwort eine Direktzugriffsantwort ist.

3. Erste Teilnehmereinrichtung nach Anspruch 1 oder Anspruch 2, wobei die dedizierte Präambel vor oder zu der Zeit der Übertragung der dedizierten Präambel durch die erste Teilnehmereinrichtung zur Zielzelle einer zweiten Teilnehmereinrichtung zugewiesen wurde.

4. Erste Teilnehmereinrichtung nach Anspruch 1 oder Anspruch 2, wobei die dedizierte Präambel zur Zeit der Übertragung der dedizierten Präambel zur Zielzelle der ersten Teilnehmereinrichtung noch zugewiesen ist.

5. Erste Teilnehmereinrichtung nach einem der vorhergehenden Ansprüche, die ferner Folgendes umfasst:
- Mittel zum Empfangen der dedizierten Präambel durch die erste Teilnehmereinrichtung via eine Quellzelle (120') von der Zielzelle.

6. Ersten Teilnehmereinrichtung nach einem der vorhergehenden Ansprüche, wobei die Antwort eine Anzeige umfasst, die anzeigt, dass die Auslegung der Ressourcen, die der ersten Teilnehmereinrichtung in der Zielzelle für die bedingte Übergabe zugeteilt sind, aufgehoben wurde.

7. Erste Teilnehmereinrichtung nach einem der vorhergehenden Ansprüche, die ferner Folgendes umfasst:
- Mittel zum Durchführen einer Zugangsprozedur durch die erste Teilnehmereinrichtung mit der Zielzelle oder einer anderen Zielzelle, nachdem bestimmt wurde, dass die Auslegung der Ressourcen, die der ersten Teilnehmereinrichtung in der Zielzelle zugeteilt sind, aufgehoben wurde.

8. Erste Teilnehmereinrichtung nach Anspruch 3, wobei die Antwort eine Kennung einer zweiten Teilnehmereinrichtung (110) umfasst.

9. Erste Teilnehmereinrichtung nach einem der vorhergehenden Ansprüche, die ferner Folgendes umfasst:
- Mittel zum Übertragen einer dedizierten Präambel, die mit Ressourcen verknüpft ist, die der ersten Teilnehmereinrichtung in der anderen Zielzelle zugeteilt sind, durch die erste Teilnehmereinrichtung zur anderen Zielzelle, wenn die Antwort zusätzliche Informationen umfasst, die eine Anzeige zum Umleiten der ersten Teilnehmereinrichtung zu einer anderen Zelle umfassen.

10. Erste Teilnehmereinrichtung nach einem der vorhergehenden Ansprüche 1 bis 8, die ferner Folgendes umfasst:
- Mittel zum Übertragen einer Neuaufbauanforderung durch die erste Teilnehmereinrichtung zur Zielzelle, wenn die Antwort zusätzliche Informationen umfasst, die eine Anzeige zum Durchführen einer Neuaufbauprozedur mit der Zielzelle umfassen.

11. Erste Teilnehmereinrichtung nach einem der vorhergehenden Ansprüche 9 bis 10, die ferner Folgendes umfasst:
- Mittel zum Detektieren des Fehlens der zusätzlichen Informationen in der Antwort; und
- in Reaktion auf das Detektieren des Fehlens von zusätzlichen Informationen in der Antwort Mittel zum Melden eines Übergabefehlers und Starten einer Neuaufbauprozedur vom Anfang.

12. Zielzellen(130')-Vorrichtung, die Folgendes umfasst:
- Mittel zum Empfangen einer dedizierten Präambel, die der ersten Teilnehmereinrichtung in der Zielzelle für eine bedingte Übergabe zugewiesen ist, durch die Zielzelle von der ersten Teilnehmereinrichtung (100); und
- Mittel zum Übertragen einer Antwort auf die empfangene dedizierte Präambel durch die Zielzelle zur ersten Teilnehmereinrichtung, wobei die Antwort anzeigt, dass die Auslegung von Ressourcen, die der ersten Teilnehmereinrichtung in der Zielzelle für die bedingte Übergabe zugeteilt sind, aufgehoben wurde.

13. Verfahren für eine bedingte Übergabe, das Folgendes umfasst:
- Übertragen (610) einer dedizierten Präambel für eine bedingte Übergabe durch eine erste Teilnehmereinrichtung (100) zu einer Zielzelle (130');
- Empfangen (620) einer Antwort auf die übertragene dedizierte Präambel durch die erste Teilnehmereinrichtung von der Zielzelle; und
- Bestimmen (630) durch die erste Teilnehmereinrichtung auf Basis der Antwort, dass die Auslegung von Ressourcen, die für die Teilnehmereinrichtung in der Zielzelle für die bedingte Übergabe zugeteilt sind, aufgehoben wurde.

14. Verfahren für eine bedingte Übergabe, das Folgendes umfasst:
- Empfangen (710) einer dedizierten Präambel, die der ersten Teilnehmereinrichtung in der Zielzelle für eine bedingte Übergabe zugewiesen ist, durch eine Zielzelle (130') von der ersten Teilnehmereinrichtung (100); und
- Übertragen (720) einer Antwort auf die empfangene dedizierte Präambel durch die Zielzelle zur ersten Teilnehmereinrichtung, wobei die Antwort anzeigt, dass die Auslegung von Ressourcen, die der ersten Teilnehmereinrichtung in der Zielzelle für die bedingte Übergabe zugeteilt sind, aufgehoben wurde.

## Revendications

1. Premier équipement d'utilisateur (100) comprenant :
- un moyen destiné à transmettre à une cellule cible (130'), au moyen du premier équipement d'utilisateur, un préambule dédié aux fins d'un transfert conditionnel ;
- un moyen destiné à recevoir de la cellule cible, au moyen du premier équipement d'utilisateur, une réponse au préambule dédié transmis ; et
- un moyen destiné à déterminer, au moyen du premier équipement d'utilisateur, sur la base de la réponse, que des ressources affectées au premier équipement d'utilisateur au niveau de la cellule cible, aux fins du transfert conditionnel, ont été déconfigurées.

2. Premier équipement d'utilisateur selon la revendication 1, dans lequel le préambule dédié est un préambule d'accès aléatoire sans conflit et/ou la réponse est une réponse d'accès aléatoire.

3. Premier équipement d'utilisateur selon la revendication 1 ou la revendication 2, dans lequel le préambule dédié a été réaffecté à un second équipement d'utilisateur avant ou au moment de la transmission du préambule dédié, par le premier équipement d'utilisateur, à la cellule cible.

4. Premier équipement d'utilisateur selon la revendication 1 ou la revendication 2, dans lequel le préambule dédié est toujours attribué au premier équipement d'utilisateur au moment de la transmission du préambule dédié à la cellule cible.

5. Premier équipement d'utilisateur selon l'une quelconque des revendications précédentes, comprenant en outre :
- un moyen destiné à recevoir, au moyen du premier équipement d'utilisateur, le préambule dédié, en provenance de la cellule cible, par le biais d'une cellule source (120').

6. Premier équipement d'utilisateur selon l'une quelconque des revendications précédentes, dans lequel la réponse comprend une indication de ce que les ressources affectées au premier équipement d'utilisateur au niveau de la cellule cible, aux fins du transfert conditionnel, ont été déconfigurées.

7. Premier équipement d'utilisateur selon l'une quelconque des revendications précédentes, comprenant en outre :
- un moyen destiné à exécuter, au moyen du premier équipement d'utilisateur, une procédure d'accès avec la cellule cible ou une autre cellule cible, lors de la détermination de ce que les ressources affectées au premier équipement d'utilisateur au niveau de la cellule cible ont été déconfigurées.

8. Premier équipement d'utilisateur selon la revendication 3, dans lequel la réponse comprend un identificateur d'un second équipement d'utilisateur (110).

9. Premier équipement d'utilisateur selon l'une quelconque des revendications précédentes, comprenant en outre :
- un moyen destiné à transmettre à ladite autre cellule cible, au moyen du premier équipement d'utilisateur, un préambule dédié associé à des ressources attribuées au premier équipement d'utilisateur au niveau de ladite autre cellule cible, si la réponse comprend des informations complémentaires comprenant une indication de redirection du premier équipement d'utilisateur vers une autre cellule.

10. Premier équipement d'utilisateur selon l'une quelconque des revendications 1 à 8 précédentes, comprenant en outre :
- un moyen destiné à transmettre à la cellule cible, au moyen du premier équipement d'utilisateur, une demande de rétablissement si la réponse comprend des informations complémentaires comprenant une indication d'exécution d'une procédure de rétablissement avec la cellule cible.

11. Premier équipement d'utilisateur selon l'une quelconque des revendications 9 à 10 précédentes, comprenant en outre :
- un moyen destiné à détecter l'absence des informations complémentaires dans la réponse ; et
- un moyen destiné à déclarer, en réponse à la détection de l'absence d'informations complémentaires dans la réponse, un échec de transfert et à lancer une procédure de rétablissement depuis le début.

12. Appareil de cellule cible (130'), comprenant :
- un moyen destiné à recevoir d'un premier équipement d'utilisateur (100), au moyen de la cellule cible, un préambule dédié attribué au premier équipement d'utilisateur au niveau de la cellule cible, aux fins d'un transfert conditionnel ; et
- un moyen destiné à transmettre, au premier équipement d'utilisateur, au moyen de la cellule cible, une réponse au préambule dédié reçu, dans lequel la réponse indique que des ressources affectées au premier équipement d'utilisateur au niveau de la cellule cible, aux fins du transfert conditionnel, ont été déconfigurées.

13. Procédé de transfert conditionnel, comprenant les étapes suivantes :
- transmettre (610), à une cellule cible (130'), au moyen d'un premier équipement d'utilisateur (100), un préambule dédié aux fins d'un transfert conditionnel ;
- recevoir (620) de la cellule cible, au moyen du premier équipement d'utilisateur, une réponse au préambule dédié transmis ; et
- déterminer (630), au moyen du premier équipement d'utilisateur, sur la base de la réponse, que des ressources affectées au premier équipement d'utilisateur au niveau de la cellule cible, aux fins du transfert conditionnel, ont été déconfigurées.

14. Procédé de transfert conditionnel, comprenant les étapes suivantes :
- recevoir (710) d'un premier équipement d'utilisateur (100), au moyen d'une cellule cible (130'), un préambule dédié affecté au premier équipement d'utilisateur au niveau de la cellule cible, aux fins d'un transfert conditionnel ; et
- transmettre (720) au premier équipement d'utilisateur, au moyen de la cellule cible, une réponse au préambule dédié reçu, dans lequel la réponse indique que des ressources affectées au premier équipement d'utilisateur au niveau de la cellule cible, aux fins du transfert conditionnel, ont été déconfigurées.
